Europäisches Patentamt

European Patent Office

Office européen des brevets

(11) Veröffentlichungsnummer: **0 295 434**
**A2**

(12) **EUROPÄISCHE PATENTANMELDUNG**

(21) Anmeldenummer: 88107723.4

(22) Anmeldetag: 13.05.88

(51) Int. Cl.⁴: **B29C 47/24**

(30) Priorität: 20.05.87 DE 8707265 U

(43) Veröffentlichungstag der Anmeldung:
21.12.88 Patentblatt 88/51

(84) Benannte Vertragsstaaten:
AT BE CH DE FR GB IT LI SE

(71) Anmelder: **Manthey, Michael**
**Lütticher Strasse 14**
**D-4200 Oberhausen 11(DE)**

(72) Erfinder: **Manthey, Michael**
**Lütticher Strasse 14**
**D-4200 Oberhausen 11(DE)**

(54) **Extruder zur Herstellung von Rohren und Hohlprofilen.**

(57) Die vorliegende Erfindung betrifft einen Extruder zur Herstellung von Rohren und Hohlprofilen aus thermoplastischen Massen. Der Extruder besteht aus einem Antriebsblock, einer Extruderschnecke und Extruderkopf mit Dorn, wobei der Dorn auf einem Dornhalter, der zentrisch durch die mit einer zylindrischen Bohrung versehene Extruderschnecke geführt wird, gelagert ist. Der Dornhalter ist durch in die Extruderschnecke eingefügte Gleitlager fixiert. Er ist als Vollstab oder als Rohr ausgebildet und besitzt an beiden Enden ein Gewinde. Dorn und Dornhalter sind fest, aber lösbar miteinander verbunden. Durch den Dornhalter kann Luft oder Energie geführt werden.

## Extruder zur Herstellung von Rohren und Hohlprofilen

Die Erfindung betrifft einen Extruder zur Herstellung von Rohren und Hohlprofilen aus thermoplastischen Massen.

Die Herstellung von Rohren und Hohlprofilen durch Extrusion erfolgt mit Hilfe von Werkzeugen, bei denen im Extruderkopf ein Dorn gelagert ist. Das von der Transportvorrichtung, der Schnecke, geförderte Material wird in dem Spalt, der vom Mantel des Extruderkopfes und dem Dorn gebildet wird, verteilt und zu dem gewünschten Hohlprofil geformt.

Zur Halterung des Dorns im Extruderkopf verwendet man Stege. Diese liegen im Materialstrom und teilen ihn in Einzelströme auf. Hinter den Stegen vereinigen sich die Teilströme wieder. Dadurch treten Unregelmäßigkeiten am fertigen Profil auf, die sich als Fließmarkierungen an den Stellen des Zusammenflusses der Teilströme zeigen und zu ungleichmäßiger Wandstärke oder zu Rissen führen.

Es ist ferner bekannt, als Halterungselemente für den Dorn Lochscheiben einzusetzen, die am Mundstück, am Schneckengehäuse oder zwischen Schneckengehäuse und Mundstäck angeordnet sind. Die Löcher der Lochscheiben sind parallel zur Achse des Mundstücks und der Schnecke gerichtet. Wie die Stege stellen auch die Lochscheiben Hindernisse für den Materialstrom dar, der wiederum in Teilströme aufgespalten wird. Diese Teilströme werden hinter der Lochscheibe nur unvollkommen zusammengeschweißt mit der Folge, daß ebenfalls Markierungen auf der Oberfläche des Extrudats erzeugt werden.

In beiden Fällen, sowohl bei Einsatz von Stegen als auch bei Einsatz von Lochscheiben zum Befestigen des Dorns er hält man also Rohre und andere Hohlprofile mit unebenmäßiger Oberfläche und gegebenenfalls auch ungleicher Wandstärke.

Durch unterschiedliche Maßnahmen wurde versucht, diesen Nachteilen zu begegnen. So hat man hinter den als Dornhalter verwendeten Stegen einen rotierenden Siebkorb angeordnet, den das zu verarbeitende Material durchströmt. Auf diese Weise wird eine erneute und intensive Mischung der Masse erreicht.

Nach einem anderen Verfahren sieht man hinter Stegen oder Lochscheiben Stauräume vor, die den Materialstrom ändern und die durch das Zusammenführen der Teilströme verursachten Unregelmäßigkeiten auf der Profiloberfläche beseitigen sollen.

In der DE-PS 11 82 420 ist ein Extruderkopf mit Dorn beschrieben, bei dem der Dornhalter als langgestreckter, durch einen Boden einseitig in Richtung der Längsachse verschlossener Hohlkörper ausgebildet ist und im Mantel eine Vielzahl von senkrecht oder geneigt zur Mundstückswand gerichteten Öffnungen vorhanden sind, die den Innenraum des Dornhalters mit dem von dem Mundstück und dem Dorn gebildeten Hohlraum auf zweifach umgelenktem Wege verbinden.

Eine andere Lösung des geschilderten Problems ist in der DE-OS 25 54 238 veröffentlicht. Diese Druckschrift betrifft ein Werkzeug zum steglosen Extrudieren von Hohlprofilen, insbesondere Schläuchen oder Rohren mit einem zwischen einem Dornhalter und einem Werkzeuggehäuse gebildeten Hohlraum mit Anschluß an den Zufuhrkanal für das Extrusionsmaterial. Hierbei ist der Hohlraum als Damm in Gestalt eines Ringspaltes mit an allen Stellen in den Extrusionsrichtungen gleicher Länge jedoch über den Querschnitt unterschiedlicher Höhe ausgebildet.

Die bekannten Vorrichtungen zur Herstellung von Rohren und Hohlprofilen durch Extrusion lösen die aufgezeigten Probleme nicht immer befriedigend und erfordern häufig einen im Hinblick auf den erzielten Erfolg nicht tragbaren Aufwand.

Der Erfindung liegt die Aufgabe zugrunde, die geschilderten Nachteile zu beheben. Sie betrifft einen Extruder, bestehend aus Antriebsblock, Extruderschnecke und Extruderkopf mit Dorn zur Herstellung von Rohren und Hohlprofilen. Er ist dadurch gekennzeichnet, daß der Dorn (1) auf einem Dornhalter (2) gelagert ist, der zentrisch durch die mit einer zylindrischen Bohrung versehene Extruderschnecke (3) geführt wird.

Es ist ein wesentliches Merkmal des erfindungsgemäßen Extruderwerkzeuges, daß die Schnecke über die gesamte Länge zentrisch durchbohrt ist. Die zylindrische Bohrung nimmt den Dornhalter auf. Er wird durch in die Bohrung eingefügte Gleitlager (4), z.B. Kugellager, fixiert. Die Extruderschnecke rotiert also um den Dornhalter als starre Achse. Der Dornhalter hat die Form eines Vollstabes, er kann jedoch auch als Rohr ausgebildet sein. In einer bevorzugten Ausführungsform ist der Dornhalter an beiden Enden mit einem Gewinde versehen.

Auf der dem Dorn abgewandten Seite ist der Dornhalter am Antriebsblock, der ebenfalls durchbohrt ist, befestigt. Die Befestigung erfolgt durch geeignete Maßnahmen, z.B. durch Verschraubung des Dornhaltergewindes mit Muttern. Für eine sorgfaltige Abdichtung des Antriebsblocks zum Extrudergehäuse hin ist zu sorgen um sicherzustellen, daß durch die Bohrung im Antriebsblock das zu extrudierende Material nicht austritt.

Dorn und Dornhalter können fest miteinander verbunden sein. Sie sind dann als Einheit austauschbar. Es ist aber auch möglich, beide Teile lösbar miteinander zu verbinden, so daß der Dorn allein ausgewechselt werden kann. Die lösbare Verbindung wird im allgemeinen ebenfalls durch Verschrauben des auch am Kopfende mit einem Gewinde versehenen Dornhalters mittels Muttern hergestellt. Durch Austausch von Dornhalter und Dorn oder bei lösbarer Verbindung des Dorns allein, können Querschnittsform und Abmessungen der Öffnung im Extruderkopf verändert und das Extruderwerkzeug einfach zur Herstellung des gewünschten Profils angepaßt werden.

Durch den Dornhalter kann gegebenenfalls Luft oder Energie zugeführt werden, ohne daß der Massestrom hinter dem Dornhalter durchbrochen werden muß.

Gegenüber den bekannten Vorrichtungen zeichnet sich der erfindungsgemäße Extruder durch sehr einfache Konstruktion aus. Er vermeidet die Entstehung von Fließmarkierungen und stellt sicher, daß die Wanddicke über die gesamte Lange des Profils gleichmäßig ist.

Der erfindungsgemäße Extruder eignet sich zur Verarbeitung der verschiedensten thermoplastischen Werkstoffe wie Polyethylen, Polypropylen, Polyvinylchlorid, insbesondere zur Verarbeitung von Polyethylen mit einer viskosimetrisch gemessenen Molekularmasse oberhalb 500.000 g/Mol und insbesondere oberhalb $10^6$ g/Mol. Er erlaubt die Herstellung von Rohren und anderen Hohlprofilen beliebiger Form und Größe.

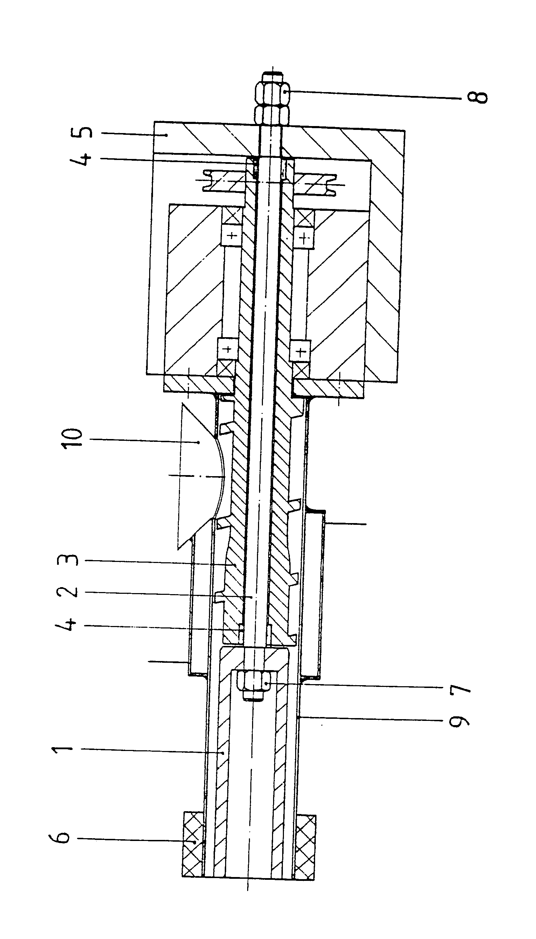

In der Zeichnung ist im Längsschnitt als Beispiel einer Ausführungsform des Gegenstandes der Erfindung ein Extruder zum Herstellen von Rohren dargestellt.

Durch eine über die gesamte Länge zentrisch durchbohrte Extruderschnecke 3 wird ein Dornhalter 2 geführt. Er ist beidseitig mit Gewinden versehen und wird durch Muttern 8 mit einem Antriebsblock 5 starr verbunden. An seinem Kopfende trägt der Dornhalter 2 einen ebenfalls mit Hilfe einer Mutter 7 befestigten Dorn 1, der in den Extruderkopf hineinragt und durch zwei Gleitlager 4 fixiert wird.

Das zu extrudierende Material wird über eine Füllvorrichtung 10 der Extruderschnecke 3 zugeführt. Die Schnecke fördert und verdichtet zunächst das Material. Nach Verdichtung und Entgasung wird es durch Heizvorrichtungen 6 geschmolzen und in dem aus der Gehäusewand 9 und dem Dorn 1 gebildeten Raum zu einem Hohlkörper geformt.

**Ansprüche**

1.) Extruder, bestehend aus Antriebsblock, Extruderschnecke und Extruderkopf mit Dorn zur Herstellung von Rohren und Hohlprofilen, dadurch gekennzeichnet, daß der Dorn (1) auf einem Dornhalter (2) gelagert ist, der zentrisch durch die mit einer zylindrischen Bohrung versehenen Extruderschnecke (3) geführt wird.

2.) Extruder nach Anspruch 1, dadurch gekennzeichnet, daß der Dornhalter (2) durch in die Extruderschnecke (3) eingefügte Gleitlager (4) fixiert wird.

3.) Extruder nach einem der Ansprüche 1 oder 2, dadurch gekennzeichnet, daß der Dornhalter (2) die Form eines Vollstabes hat.

4.) Extruder nach einem der Ansprüche 1 oder 2, dadurch gekennzeichnet, daß der Dornhalter (2) als Rohr ausgebildet ist.

5.) Extruder nach einem der Ansprüche 3 oder 4, dadurch gekennzeichnet, daß der Dornhalter (2) an beiden Enden mit einem Gewinde versehen ist.

6.) Extruder nach einem der Ansprüche 1 bis 5, dadurch gekennzeichnet, daß der Dorn (1) und Dornhalter (2) fest miteinander verbunden sind.

7.) Extruder nach einem der Ansprüche 1 bis 5, dadurch gekennzeichnet, daß der Dorn (1) und der Dornhalter (2) lösbar miteinander verbunden sind.

8.) Extruder nach einem der Ansprüche 1 bis 7, dadurch gekennzeichnet, daß durch den Dornhalter (2) Luft oder Energie zugeführt wird.

EP 0 295 434 A2